# EUROPEAN PATENT APPLICATION

(11) **EP 2 904 909 A1**
(43) Date of publication of application: **12.08.2015**
(21) Application number: 13843639.9
(22) Date of filing: 02.10.2013
(51) Int. Cl.: A23L 1/226

(54) **SHRIMP FLAVOR COMPOSITION AND SHRIMP FLAVOR ENHANCER**

(30) Priority: 02.10.2012 JP 2012220787
(71) Applicant: Takasago International Corporation, Tokyo 144-8721 (JP)
(72) Inventor: VALERIE, Rota, 53909 Zuelpich (DE); SAWAMURA, Ryosuke, Hiratsuka-shi Kanagawa 254-0073 (JP); NAKATOH, Azusa, Hiratsuka-shi Kanagawa 254-0073 (JP); NAGAHASHI, Hisaya, Hiratsuka-shi Kanagawa 254-0073 (JP)
(74) Representative: Takeuchi, Maya
(86) International application number: PCT/JP2013/076858
(87) International publication number: WO 2014/054705

(57) **Abstract**

The present invention is intended to provide a shrimp flavor composition and a shrimp flavor enhancer with which a more desirable shrimp flavor can be obtained, and to provide a food, a drink or a seasoning that contains the composition or the enhancer. The present invention is concerned with a shrimp flavor composition and a shrimp flavor enhancer that contain at least one of 1,5-octadien-3-one and 1,5-octadien-3-ol, and a food, a drink or a seasoning that contains the composition or the enhancer.

## Description

### Technical Field

The present invention relates to a shrimp flavor composition that contains 1,5-octadien-3-one and/or 1,5-octadien-3-ol, and to a food, a drink or a seasoning that contains the shrimp flavor composition, and further relates to a shrimp flavor enhancer that contains 1,5-octadien-3-one and/or 1,5-octadien-3-ol, and to a food, a drink or a seasoning that contains the shrimp flavor enhancer.

### Background Art

Conventionally, shrimp flavor compositions use materials, for example, such as (1) a crustacean extract, (2) a crustacean oleoresin, (3) a seasoning oil, (4) a supercritical carbon dioxide gas extract of crustacean, (5) a fractionated flavoring, and (6) a synthetic flavoring, and one or more of these may be appropriately combined and prepared according to the intended use to obtain a shrimp flavor composition (Non Patent Literature 1).

As flavor characteristics desired for a shrimp flavor composition, a natural flavor characteristic of shrimp, and a flavor characteristic that evokes a perception of boiled flavor or a perception of roast flavor that stimulates appetite in harmony with a dish are required.

Patent Literature 1 proposes, as a stronger and more desirable crustacean flavor composition, a crustacean flavor composition characterized in that materials are classified into 12 categories: (A) hydrocarbons, (B) alcohols, (C) phenols, (D) aldehydes, (E) ketones, (F) esters, (G) lactones, (H) carboxylic acids, (I) furan compounds, (J) nitrogen-containing compounds, (K) sulfur-containing compounds, and (L) flavorings of natural origin, and at least one, preferably two or more materials selected from a group composed of these (A) to (L) are appropriately mixed with amino acids.

In preparation of a shrimp flavor composition by using a synthetic flavoring, an odor analysis data of various heat-treated shrimps are generally used as a reference.

Odor analysis is typically performed by gas chromatography, and the analysis values are generally shown by being sorted in order of odor retention time (hereinafter, also referred to simply as "retention time"), or by being classified according to functional group. Therefore, a flavor preparing person who refers to the odor analysis data often start preparation by selecting various synthetic flavorings referring to the retention time or according to the functional group.

1,5-Octadien-3-one is a known compound contained in beef and the like, and is known to have a metallic odor or a geranium odor (Non Patent Literatures 2 to 6). On the other hand, 1,5-octadien-3-ol is a known compound contained in roast chicken, cauliflower and the like, and is known as a compound which has an odor that evokes a tree aroma or a geranium aroma (Non Patent Literatures 7 and 8).

### Prior Art Literatures

### Patent Literature

Patent Literature 1: JP-A-2005-160402

### Non Patent Literatures

Non Patent Literature 1: Patent Office Publication, Published Collection of Well-Known Prior Arts [Flavor] vol. 2, Food Flavors 3.10.3 Crustacean Flavor, published on January 14, 2000
Non Patent Literature 2: Journal of food science, Vol.61 (1996), pp.1271-1284
Non Patent Literature 3: Z Lebensm Unters Forsch A (1997) 205: pp.232-238
Non Patent Literature 4: Z Lebensm Unters Forsch A (1997) 204: pp.3-6
Non Patent Literature 5: Z Lebensm Unters Forsch (1988) 186: pp.489-494
Non Patent Literature 6: Journal of the Science of Food and Agriculture, Vol.28, 11, pp.1019-1024, November 1977
Non Patent Literature 7: Lebensm. Wiss. Technol., 20 (1987), pp. 37-41
Non Patent Literature 8: J. Agric. Food Chem., 2002, 50, pp. 6459-6467

### Summary of Invention

### Technical Problem

However, it is rarely the case that a shrimp flavor composition prepared by directly replicating the quantitative analysis data of odor components is usable as a composition with the intended shrimp flavor, and usually, satisfying flavor was not able to be obtained.

Generally used synthetic flavoring-based shrimp flavors are designed flavors that highlight or elaborate the characteristic odor of shrimp by finding the specific odor components of shrimp through odor analyses. Specifically, the intended shrimp can be recognized by using a shrimp flavor composition in combination with a color and a taste of a final product relating shrimp, and the desired shrimp flavor could not be reproduced by the flavor itself.

As noted above, in order to prepare desired shrimp flavor compositions, they were often composed of, mainly, materials such as (1) a crustacean extract, (2) a crustacean oleoresin, (3) a seasoning oil, (4) a supercritical carbon dioxide gas extract of crustacean, (5) a fractionated flavoring, and (6) a synthetic flavoring. However, because shrimp flavor compositions using such materials are of low potency, novel materials are needed and there was room for improvement for the preparation of a composition for obtaining a stronger and more desirable shrimp flavor.

Compounds such as 1,5-octadien-3-one and 1,5-octadien-3-ol are known as odor components, as noted above. However, use for imparting or enhancing a shrimp flavor was not known.

It is accordingly a first object of the present invention to provide a shrimp flavor composition and a shrimp flavor enhancer that can provide a more desirable shrimp flavor. A further object of the present invention is such as to provide a variety of food, drink or a seasoning that uses the composition or the enhancer, and to impart a shrimp flavor to a food, a drink and a seasoning, or enhance it with the use of the composition and the enhancer.

As used in the present specification, "desirable shrimp flavor" means that flavor characteristics (shrimp flavor) are more desirable, that evoke such as a flavor of a soup that results from boiling shrimp or the flavor that results from sauteing shrimp (a perception of boiled flavor), a flavor of fried shrimp that results from frying shrimp with oil (a perception of fried flavor), and a flavor of roast shrimp that results from roasting shrimp (a perception of roast flavor).

### Solution to Problem

The present inventors conducted intensive studies to find a solution to the foregoing problems, and found that a shrimp flavor composition obtained by mixing 1,5-octadien-3-one and/or 1,5-octadien-3-ol surprisingly has a shrimp flavor with strong flavor and body, and an excellent roast flavor, resulted in completion of the present invention.

Specifically, the present invention relates to the following (1) to (12).
(1) A shrimp flavor composition containing at least one of 1,5-octadien-3-one and 1,5-octadien-3-ol.
(2) The shrimp flavor composition according to (1), containing a shrimp flavor selected from a boiled flavor, a fried flavor, and a roast flavor.
(3) The shrimp flavor composition according to (1) or (2), in which a total content of the 1,5-octadien-3-one and the 1,5-octadien-3-ol is 0.001 ppm to 1000 ppm by mass.
(4) A food, a drink or a seasoning, containing the shrimp flavor composition according to any one of (1) to (3).
(5) A method for imparting a shrimp flavor to a food, a drink or a seasoning, in which the shrimp flavor composition according to any one of (1) to (3) is added.
(6) A method for enhancing a shrimp flavor of a food, a drink or a seasoning, the method including adding the shrimp flavor composition according to any one of (1) to (3).
(7) A shrimp flavor enhancer, containing at least one of 1,5-octadien-3-one and 1,5-octadien-3-ol.
(8) The shrimp flavor enhancer according to (7), which enhances a shrimp flavor selected from a boiled flavor, a fried flavor, and a roast flavor.
(9) A food, a drink or a seasoning, containing the shrimp flavor enhancer according to (7) or (8).
(10) The food, the drink or the seasoning according to (9), in which a total content of the 1,5-octadien-3-one and the 1,5-octadien-3-ol is 0.0001 ppb to 10 ppm by mass.
(11) A method for imparting a shrimp flavor to a food, a drink or a seasoning, the method including adding the shrimp flavor enhancer according to (7) or (8).
(12) A method for enhancing a shrimp flavor of a food, a drink or a seasoning, the method including adding the shrimp flavor enhancer according to (7) or (8).

### Advantageous Effects of Invention

The present invention can provide a shrimp flavor composition which is useful as a flavor enhancer or the like for food, drink, seasonings or the like, and which has an excellent shrimp flavor that accompanies a perception of boiled flavor, a perception of fried flavor, or a perception of roast flavor, by mixing 1,5-octadien-3-one and/or 1,5-octadien-3-ol with a shrimp flavor composition.

### Description of Embodiments

The present invention is described below in detail. However, the present invention is not limited to the following embodiment, and may be carried out with arbitral modifications without deviating from the gist of the present invention.

As used in the present specification, "mass%" and "mass part", and "weight%" and "weight part" have the same meaning, respectively, and when simply mention "%", "ppm", and "ppb", they indicate "weight%", "weight ppm", and "weight ppb", respectively.

The shrimp flavor composition according to the present invention contains at least one of 1,5-octadien-3-one and 1,5-octadien-3-ol. At the beginning, the following describes 1,5-octadien-3-one and 1,5-octadien-3-ol.

There exist two geometric isomers, (5E)-form and (5Z)-form, for 1,5-octadien-3-one, depending on cis-trans resulting from the substituents on the double bond within the molecule. Specifically, there are two kinds, (5E)-1,5-octadien-3-one and (5Z)-1,5-octadien-3-one.

For 1,5-octadien-3-ol, there exist (3S)-form and (3R)-form due to a single asymmetric carbon within the molecule, and there exist two geometric isomers, (5E)-form and (5Z)-form, depending on cis-trans resulting from the substituents on the double bond. Specifically, there are four kinds, (3S)-(5E)-1,5-octadien-3-ol, (3R)-(5E)-1,5-octadien-3-ol, (3S)-(5Z)-1,5-octadien-3-ol, and (3R)-(5Z)-1,5-octadien-3-ol.

All of these 1,5-octadien-3-one and 1,5-octadien-3-ol are in oil (liquid) form at ordinary temperature.

The present invention may use any isomer of 1,5-octadien-3-one and 1,5-octadien-3-ol, or may use a mixture of these.

These isomers can be distinguished on the basis of the retention time in gas chromatography. In this specification, no distinction is made for these isomers, and they are collectively referred to as "1,5-octadien-3-one" or "1,5-octadien-3-ol".

As the 1,5-octadien-3-one and/or 1,5-octadien-3-ol, ones obtained by extraction from natural products may be used, or ones obtained by chemical synthesis (for example, ones synthesized according to the methods described in Non Patent Literature 6) may be used. The ones obtained from natural products and obtained by chemical synthesis may be used in a combination.

High-purity 1,5-octadien-3-one and/or 1,5-octadien-3-ol can be obtained in large quantities in the case by chemical synthesis.

The content of the 1,5-octadien-3-one and the 1,5-octadien-3-ol in the shrimp flavor composition of the present invention is, by their total content, preferably 0.001 ppm to 1000 ppm, more preferably 0.01 ppm to 100 ppm, and further preferably 0.1 ppm to 10 ppm. With a content of 0.001 ppm or more, the present invention can sufficiently exhibit effects, and with a content of 1000 ppm or less, an odorant note becomes more desirable as a shrimp flavor, and therefore they are preferred.

The shrimp flavor composition of the present invention may contain other odor components.

Non-limiting examples of such other odor components include known synthetic flavoring compounds, including: hydrocarbons such as limonene, ocimene, α-pinene, (β-pinene, γ-terpinene, sabinene, and myrcene; alcohols such as linalol, citronellol, dihydrolinalol, tetrahydromugol, myrcenol, dihydromyrcenol, tetrahydromyrcenol, ocimenol, terpineol, 3-thujanol, benzyl alcohol, β-phenylethyl alcohol, α-phenylethyl alcohol, and cis-3-hexenol; aldehydes such as acetaldehyde, n-hexanal, n-heptanal, n-octanal, n-nonanal, cis-3-hexenal, cis-6-nonenal, 3,5,5-trimethylhexanal, decanal, undecanal, 2-methyldecanal, dodecanal, tridecanal, tetradecanal, trans-2-hexenal, trans-4-decenal, cis-4-decenal, trans-2-decenal, 10-undecenal, trans-2-undecenal, trans-2-dodecenal, 3-dodecenal, trans-2-tudecenal, 2,4-hexadienal, 2,4-decadienal, 2,4-dodecadienal, 5,9-dimethyl-4,8-decadienal, citral, citronellal, benzaldehyde, cuminaldehyde, vanillin, and ethyl vanillin; ketones such as 2-butanone, 3-heptanone, 3-octanone, 2-nonanone, 2-undecanone, 2-tridecanone, methyl heptenone, dimethyl octenone, geranyl acetone, 2,3,5-trimethyl-4-cyclohexenyl-1-methylketone, 3-methyl-2,4-nonanedione, Nerone (Givaudan, registered trade mark), nootkatone, dihydronootkatone, acetophenone, and 4,7-dihydro-2-isopentyl-2-methyl-1,3-dioxepin; esters such as propyl formate, octyl formate, linalyl formate, citronellyl formate, geranyl formate , neryl formate, terpinyl formate, ethyl acetate, isopropyl acetate, cis-3-hexenyl acetate, trans-2-hexenyl acetate, octyl acetate, nonyl acetate, decyl acetate, dodecyl acetate, dimethyl undecadienyl acetate, ocimenyl acetate, myrcenyl acetate, dihydromyrcenyl acetate, linalyl acetate, citronellyl acetate, geranyl acetate, neryl acetate, tetrahydromugol acetate, lavandulyl acetate, nerolidol acetate, dihydrocuminyl acetate, terpinyl acetate, citryl acetate, nopyl acetate, dihydroterpinyl acetate, 2,4-dimethyl-3-cyclohexenylmethyl acetate, myraldyl acetate, boeticol acetate, decenyl propionate, linalyl propionate, geranyl propionate, neryl propionate, terpinyl propionate, tricyclodecenyl propionate, styralyl propionate, octyl butyrate, neryl butyrate, cinnamyl butyrate, isopropyl isobutyrate, octyl isobutyrate, linalyl isobutyrate, neryl isobutyrate, linalyl isovalerate, terpinyl isovalerate, phenylethyl isovalerate, 2-methylpentyl 2-methyl valerate, methyl 3-hydroxyhexanoate, ethyl 3-hydroxyhexanoate, methyl octanoate, octyl octanoate, linalyl octanoate, methyl nonanoate, methyl undecylenate, linalyl benzoate, methyl cinnamate, isoprenyl angelate, methyl geranate, and triethyl citrate; phenols such as thymol, carvacrol, and β-naphthol isobutyl ether; lactones such as γ-undecalactone, and δ-dodecalactone; fatty acids such as acetic acid, propionic acid, butyric acid, valeric acid, hexanoic acid, octanoic acid, decanoic acid, dodecanoic acid, 2-decenoic acid, and geranic acid; sulfides such as diallyl sulfide, diallyl disulfide, dipropyl disulfide, methyl propyl disulfide, allyl propyl disulfide, and diallyl trisulfide; and nitrogen- or sulfur-containing compounds such as methyl anthranilate, ethyl anthranilate, methyl N-methyl anthranilate, methyl N-2'-methyl pentylidene anthranilate, ligantraal, dodecanenitrile, 2-tridecenenitrile, geranyl nitrile, citronellyl nitrile, 3,7-dimethyl-2,6-nonadienonitrile, indole, 5-methyl-3-heptanoneoxime, thiogeraniol, limonenethiol, and P-menthyl-8-thiol, and
crustacean (such as shrimp, and crab) extracts; flavors with crustacean flavor obtained by solvent extraction, hydrodistillation, enzyme treatment, heat reactions, and the like; fishery product extracts; plant essential oils such as peppermint oil, spearmint oil, and spice essential oils of such as ginger, pepper, and onion; and oily extracts such as spice extracts, and oleoresins thereof.

These may be arbitrarily combined and mixed to prepare the shrimp flavor composition.

In the shrimp flavor composition according to the present invention, the mass ratio of the total content of the 1,5-octadien-3-one and the 1,5-octadien-3-ol to other odor components is preferably 1:9 to 1:99.9 from the standpoint of improving the shrimp flavor.

The shrimp flavor composition of the present invention may contain components other than the odor components, exemplified as suitable solvents for dissolving the odor components. Examples thereof include water, ethyl alcohol, glycerine, propylene glycol, triacetin, middle-chain fatty acid glycerine ester, food oils and fats such as food vegetable oils, natural pigments usable for food or drink, vitamins, vegetable resins, and the like.

From the standpoint of ease of handling of the composition, these are contained in preferably 0 to 99 mass% of the shrimp flavor composition.

A shrimp flavor composition prepared into a liquid form by using the foregoing solvents may be prepared into a powder form by adding carriers such as lactose, dextrin, gum arabic, and cyclodextrin, or into an emulsion with the use of various emulsifiers usable for food or drink. Besides, a composition may be prepared and used in arbitral form such as a paste form, a granule form, and a microcapsule according to its intended use.

The shrimp flavor composition according to the present invention preferably has a shrimp flavor selected from a boiled flavor, a fried flavor, or a roast flavor.

The shrimp flavor composition according to the present invention can impart a shrimp flavor to a food, a drink or a seasoning by being added thereto. Specifically, a food or drink with an imparted shrimp flavor can easily be produced even if the food, the drink or the seasoning does not have any shrimp flavor.

A food, a drink or a seasoning with the enhanced shrimp flavor can be obtained by adding the shrimp flavor composition according to the present invention to a food, a drink or a seasoning that already has a shrimp flavor.

Such food, drink or seasoning (hereinafter, also referred to simply as "shrimp flavored food or drink", or "shrimp flavored seasoning", respectively) containing the shrimp flavor composition according to the present invention are not particularly limited. Preferably, these are food, drink or seasonings relating shrimp, such as a shrimp flavored food or drink or a shrimp flavored seasoning as represented by soup, instant noodle, snack, and the like.

A compounding amount of the shrimp flavor composition of the present invention to the shrimp flavored food or drink or the shrimp flavored seasoning varies depending on such as the intended use, and the type and the odorant note strength of the shrimp flavor enhancer. For example, a concentration range may be 0.001% to 10%, preferably 0.01 to 3%.

The present invention also can provide a shrimp flavor enhancer containing 1,5-octadien-3-one and/or 1,5-octadien-3-ol. The flavor enhanced by the enhancer is preferably a shrimp flavor selected from a boiled flavor, a fried flavor, and a roast flavor.

As the 1,5-octadien-3-one and/or the 1,5-octadien-3-ol here, any of the foregoing geometric isomers may be used, and two or more of them may be used in combination.

The total of a compounding amount of the 1,5-octadien-3-one and the 1,5-octadien-3-ol in the shrimp flavor enhancer of the present invention to the shrimp flavored food or drink or the shrimp flavored seasoning varies depending on such as the intended use and the type of the shrimp flavor enhancer. For example, a concentration range may be 0.0001 ppb to 10 ppm, preferably 0.001 ppb to 1 ppm, more preferably 0.01 ppb to 0.1 ppm.

As the content of the 1,5-octadien-3-one and the 1,5-octadien-3-ol in the shrimp flavor enhancer, in their total content, 0.001 ppm to 1000 ppm is preferred in that the present invention can sufficiently exhibit effects, and an odorant note becomes more desirable as a shrimp flavor.

The shrimp flavor composition of the present invention may be added to the shrimp flavored food or drink or the shrimp flavored seasoning to enhance the shrimp flavors of them, and may be added to various food, drink or seasonings having no shrimp flavor to easily produce a food, a drink or a seasoning that has an imparted shrimp flavor.

### Examples

The following describes the present invention in greater detail by using Examples. However, the present invention is in no way limited by the following, and may be altered or modified in many ways without deviating from the scope of the invention. Concerning to the unit in the formulations described below, composition ratios indicate, unless specifically mentioned, mass ratios.

### (Example 1) Shrimp Flavor Enhancer

In Example 1, a shrimp flavor enhancer was prepared by preparing a 0.1% aqueous solution of 1,5-octadien-3-one. The 1,5-octadien-3-one here is (5Z)-1,5-octadien-3-one, obtained by the synthesis method described in Non Patent Literature 6.

### (Example 2) Shrimp Flavor Enhancer

In Example 2, a shrimp flavor enhancer was prepared by preparing a 0.1% aqueous solution of 1,5-octadien-3-one. The 1,5-octadien-3-ol here is (5Z)-1,5-octadien-3-ol, obtained by the synthesis method described in Non Patent Literature 6.

### (Examples 3 and 4) Shrimp Flavor Composition

Shrimp flavor compositions were obtained by mixing each component according to the formulations presented in the Table 1 below. The obtained compositions both had a boiled flavor.

**[Table 1]**

| (mass part) | | |
|---|---|---|
| Component | Example 3 | Example 4 |
| α-Pinene | 5 | 5 |
| Limonene | 3 | 3 |
| 1-Penten-3-ol | 1 | 1 |
| 2-Ethylhexanol | 1 | 1 |
| Benzyl alcohol | 1 | 1 |
| Phenylethyl alcohol | 3 | 3 |
| 4-Ethylguaiacol | 5 | 5 |
| Anisole | 2 | 2 |
| Isopentanal | 1 | 1 |
| Hexanal | 1 | 1 |
| Melonal | 1 | 1 |
| Phenylacetaldehyde | 3 | 3 |
| 2-Octanone | 5 | 5 |
| 2-Methoxyacetophenone | 2 | 2 |
| Methylheptenone | 1 | 1 |
| β-Ionone | 1 | 1 |
| 2-Decanone | 1 | 1 |
| 2,3-Dimethylcyclohexan-2-one | 1 | 1 |
| Ethyl 4-methylbenzoate | 3 | 3 |
| Isopentanoic acid | 1 | 1 |
| Hexanoic acid | 3 | 3 |
| Furfural | 1 | 1 |
| Dimethylamine | 2 | 2 |
| Trimethylamine | 10 | 10 |
| N-Methylpyrrole | 3 | 3 |
| Pyridine | 1 | 1 |
| 2-Ethyl-5-methylpyrazine | 1 | 1 |
| Ethyl trimethylpyrazine | 1 | 1 |
| Tetramethylpyrazine | 2 | 2 |
| Methionol | 2 | 2 |
| Methional | 10 | 10 |
| Dimetyl disulfide | 5 | 5 |
| Lobster oleoresin | 30 | 30 |
| Shrimp flavor enhancer of Example 1 | 0.5 | |
| Shrimp flavor enhancer of Example 2 | | 0.5 |
| Ethanol | Remainder | Remainder |
| Total | 1000 | 1000 |

### (Comparative Example 1) Shrimp Flavor Composition

A shrimp flavor composition was prepared in the same manner as in Example 3, except that the shrimp flavor enhancer was not contained.

### (Application Example 1) Shrimp Flavor Oil

To 200 g of shrimp shell was added 1 kg of water and the mixture was heated at 120°C for 4 hours. After cooling, an insoluble solid was removed to obtain 850 g of shrimp extract. The extract was concentrated under reduced pressure to mass of 1/3, and the resulting concentrate was, after adding 150 g of canola oil and the shrimp flavor composition of Example 3 by 2 mass% with respect to the canola oil, stirred under heat at 100°C for 3 hours. The mixture was cooled, and centrifuged to collect the shrimp flavor oil layer portion to obtain a present product 1 (shrimp flavor oil).

### (Application Example 2) Shrimp Flavor Oil

A present product 2 (shrimp flavor oil) was obtained in the same manner as in Application Example 1, except that the shrimp flavor composition of Example 4 was used instead of the shrimp flavor composition of Example 3.

### (Comparative Application Example 1) Shrimp Flavor Oil

A comparative product 1 (shrimp flavor oil) was obtained in the same manner as in Application Example 1, except that the shrimp flavor composition of Comparative Example 1 was used instead of the shrimp flavor composition of Example 3.

The present product 1, the present product 2, and the comparative product 1 were each diluted in 20 times with canola oil, and evaluated for flavor in a sensory evaluation participated by 10 trained panelists. All panelists rated the present product 1 and the present product 2 as more imparting an impression of an enhanced top impact and a distinct edge, and more having an enduring shrimp flavor than the comparative product 1.

### (Test Examples 1-1 to 1-8) Tests on the Effect of 1,5-Octadien-3-One in Shrimp Flavor Oil

Shrimp flavor enhancers of Test Examples 1-1 to 1-8 were each prepared by preparing 1,5-octadien-3-one aqueous solutions in the same manner as in Example 1, with the 1,5-octadien-3-one varied to have the concentrations shown in Table 2. Shrimp flavor compositions of Test Examples 1-1 to 1-8 were prepared by each using the shrimp flavor enhancers in Example 3 prepared instead of the shrimp flavor enhancer of Example 1.

**[Table 2]**

| Test Examples | 1-1 | 1-2 | 1-3 | 1-4 | 1-5 | 1-6 | 1-7 | 1-8 |
|---|---|---|---|---|---|---|---|---|
| Concentration (ppm) | 0 | 0.005 | 0.05 | 0.5 | 5 | 50 | 500 | 5000 |

Shrimp flavor oils of Test Examples 1-1 to 1-8 were obtained in the same manner as in Application Example 1, except that the shrimp flavor compositions of Test Examples 1-1 to 1-8 were used instead of the shrimp flavor composition of Example 3.

The shrimp flavor oils of Test Examples 1-1 to 1-8 were each diluted in 20 times with canola oil, and evaluated for flavor in a sensory evaluation participated by 10 trained panelists. All panelists rated the shrimp flavor oils of Test Examples 1-2 to 1-7 as notably having a roundness and a richness with a sense of harmony, and having enduring shrimp flavor. The shrimp flavor oils of Test Examples 1-4 to 1-6 were particularly found to have a desirable shrimp flavor. On the other hand, all panelists rated that the shrimp flavor oil of Test Example 1-1 did not sufficiently develop a perception of shrimp flavor and that the shrimp flavor oil of Test Example 1-8 was undesirable because of the odorant note that was different from a shrimp flavor.

### (Test Examples 2-1 to 2-8) Tests on the Effect of 1,5-Octadien-3-Ol in Shrimp Flavor Oil

Shrimp flavor enhancers of Test Examples 2-1 to 2-8 were each prepared by preparing 1,5-octadien-3-ol aqueous solutions in the same manner as in Example 2, with the 1,5-octadien-3-ol varied to have the concentrations shown in Table 3. Shrimp flavor compositions of Test Examples 2-1 to 2-8 were prepared by each using the shrimp flavor enhancers in Example 4 prepared instead of the shrimp flavor enhancer of Example 2.

**[Table 3]**

| Test Examples | 2-1 | 2-2 | 2-3 | 2-4 | 2-5 | 2-6 | 2-7 | 2-8 |
|---|---|---|---|---|---|---|---|---|
| Concentration (ppm) | 0 | 0.005 | 0.05 | 0.5 | 5 | 50 | 500 | 5000 |

Shrimp flavor oils of Test Examples 2-1 to 2-8 were obtained in the same manner as in Application Example 1, except that the shrimp flavor compositions of Test Examples 2-1 to 2-8 were used instead of the shrimp flavor of Example 4.

The shrimp flavor oils of Test Examples 2-1 to 2-8 were each diluted in 20 times with canola oil, and evaluated for flavor in a sensory evaluation participated by 10 trained panelists. All panelists rated the shrimp flavor oils of Test Examples 2-2 to 2-7 as notably having a roundness and a richness with a sense of harmony, and having enduring shrimp flavor. The shrimp flavor oils of Test Examples 2-4 to 2-6 were particularly found to have a desirable shrimp flavor. On the other hand, all panelists rated that the shrimp flavor oil of Test Example 2-1 did not sufficiently develop a perception of shrimp flavor and that the shrimp flavor oil of Test Example 2-8 was undesirable because of the odorant note that was different from a shrimp flavor.

While the present invention has been described in detail with reference to specific embodiments thereof, it will be apparent to one skilled in the art that various changes and modifications can be made therein without departing from the spirit and scope thereof.

This application is based on Japanese Patent Application (No. 2012-220787) filed on October 2, 2012, the contents of which are incorporated herein by reference.

## Claims

1. A shrimp flavor composition comprising at least one of 1,5-octadien-3-one and 1,5-octadien-3-ol.

2. The shrimp flavor composition according to claim 1, comprising a shrimp flavor selected from a boiled flavor, a fried flavor, and a roast flavor.

3. The shrimp flavor composition according to claim 1 or 2, wherein a total content of the 1,5-octadien-3-one and the 1,5-octadien-3-ol is 0.001 ppm to 1000 ppm by mass.

4. A food, a drink or a seasoning, comprising the shrimp flavor composition according to any one of claims 1 to 3.

5. A method for imparting a shrimp flavor to a food, a drink or a seasoning, wherein the shrimp flavor composition according to any one of claims 1 to 3 is added.

6. A method for enhancing a shrimp flavor of a food, a drink or a seasoning, wherein the shrimp flavor composition according to any one of claims 1 to 3 is added.

7. A shrimp flavor enhancer, comprising at least one of 1,5-octadien-3-one and 1,5-octadien-3-ol.

8. The shrimp flavor enhancer according to claim 7, which enhances a shrimp flavor selected from a boiled flavor, a fried flavor, and a roast flavor.

9. A food, a drink or a seasoning, comprising the shrimp flavor enhancer according to claim 7 or 8.

10. The food, the drink or the seasoning according to claim 9, wherein a total content of the 1,5-octadien-3-one and the 1,5-octadien-3-ol is 0.0001 ppb to 10 ppm by mass.

11. A method for imparting a shrimp flavor to a food, a drink or a seasoning, the method comprising adding the shrimp flavor enhancer according to claim 7 or 8.

12. A method for enhancing a shrimp flavor of a food, a drink or a seasoning, the method comprising adding the shrimp flavor enhancer according to claim 7 or 8.
